(19) Europäisches Patentamt
European Patent Office
Office européen des brevets

(11) EP 2 544 291 B1

(12) **EUROPEAN PATENT SPECIFICATION**

(45) Date of publication and mention of the grant of the patent:
**18.01.2017 Bulletin 2017/03**

(21) Application number: **10846963.6**

(22) Date of filing: **27.12.2010**

(51) Int Cl.:
***H01M 4/14*** (2006.01) ***H01M 4/62*** (2006.01)
***H01M 10/06*** (2006.01) ***H01M 2/16*** (2006.01)
*H01M 4/02* (2006.01)

(86) International application number:
**PCT/JP2010/007567**

(87) International publication number:
**WO 2011/108056 (09.09.2011 Gazette 2011/36)**

(54) **LEAD STORAGE BATTERY**

BLEIAKKUMULATOR

ACCUMULATEUR AU PLOMB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2010 JP 2010044212**

(43) Date of publication of application:
**09.01.2013 Bulletin 2013/02**

(73) Proprietor: **Shin-Kobe Electric Machinery Co., Ltd.**
**Tokyo 104-0044 (JP)**

(72) Inventors:
- **MINOURA, Satoshi**
  **Tokyo 104-0044 (JP)**
- **SHIBAHARA, Toshio**
  **Tokyo 104-0044 (JP)**
- **SAKAI, Masanori**
  **Tokyo 104-0044 (JP)**
- **KOGURE, Koji**
  **Tokyo 104-0044 (JP)**

(74) Representative: **Wilson Gunn**
**Blackfriars House**
**The Parsonage**
**5th Floor**
**Manchester M3 2JA (GB)**

(56) References cited:
**WO-A1-2005/124920** **JP-A- 6 076 815**
**JP-A- 2002 141 066** **JP-A- 2002 231 247**
**JP-A- 2003 338 284** **JP-A- 2004 127 585**
**JP-A- 2006 196 191** **JP-A- 2008 243 487**
**JP-A- 2008 277 244** **US-A- 6 074 782**

- **YUKIO FUJITA ET AL.: 'Lead-acid Battery for Idling-stop Vehicles of GS Yuasa' 2010IEEJAPAN 05 February 2010, pages 13 - 18, XP008169061**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 544 291 B1

## Description

### TECHNICAL FIELD

The present invention relates to a flooded-type lead acid storage battery having a free electrolyte from the plate and separator inside a container.

### BACKGROUND ART

Lead acid storage batteries are characteristic in being highly reliable and inexpensive, and are therefore widely used as a power source for starting automobiles, a power source for golf carts and other electric vehicles, and a power source for uninterruptible power supply devices and other industrial apparatuses.

In recent years, various techniques for improving fuel economy in automobiles have been studied in order to prevent air pollution and global warming. Micro-hybrid vehicles are being studied as automobiles in which fuel economy-improvement techniques have been implemented, such vehicles including idling-stop system vehicles (hereinafter referred to as ISS vehicles) that reduce engine operation time by stopping the engine when the vehicle stopped in order to avoid wasteful idling operation, and power generation and control vehicles that make efficient use of engine rotation by controlling the alternator so as to reduce as much as possible the load placed on the engine.

In an ISS vehicle, the number of engine start-up cycles is higher and high-current discharge by the lead acid storage battery is repeated each time the vehicle is started. Also, in an ISS vehicle or power generation and control vehicle, charging is often insufficient because the amount of power generated by the alternator is reduced and the lead acid storage battery is charged intermittently. For this reason, a lead acid storage battery used in an ISS vehicle must have the ability to charge as much as possible in a short period of time, i.e., must have improved charge acceptance. In a power generation and control vehicle, control is carried out so that charging of the storage battery is stopped to reduce the load on the engine when the engine is under a heavy load such as during acceleration from a stop and when the charge level of the storage battery has reached a fixed level; so that the storage battery is rapidly charged in a short period of time to restore the charge level when the charge level of the storage battery has reached an insufficient state; and so that the storage battery is vigorously charged by the power output of the alternator during deceleration or at other times when the alternator should actively place a load on the engine. Therefore, charge acceptance must be improved in a lead acid storage battery used in a power generation and control vehicle.

Batteries that are used in the above-described methods are used in a partially charged state referred to as a partial state of charge (PSOC). A lead acid storage battery that is used in a PSOC tends to have a shorter service life than when used in a fully charged state. The reason that service life is shortened when used under PSOC is thought to be that lead sulfate particle generated on the negative plate during discharge coarsens and it becomes difficult for the lead sulfate to return to spongy lead, which is a charge product, when charging and discharging are carried out in a state of insufficient charge. Therefore, in order to extend service life in a lead acid storage battery that is used under PSOC, it is necessary to improve charge acceptance (make it possible carry out as much charging as possible in a short period of time), prevent repeated charging and discharging in a state of excessively insufficient charge, and reduce coarsening of lead sulfate particle due to repeated charging and discharging.

A lead acid storage battery used under PSOC has few opportunities to be charged and does not reach a fully charged state. Therefore, it is difficult for the electrolyte to be stirred in accompaniment with the generation of hydrogen gas in the container. For this reason, higher concentration of electrolyte resides in the lower portion of the container, lower concentration of electrolyte resides in the upper portion of the container, and the electrolyte becomes stratified in this type of lead acid storage battery. When the concentration of electrolyte is high, charge acceptance becomes increasingly difficult (charging reactions occur with greater difficulty), and the service life of the lead acid storage battery is reduced even further.

Thus, in recent automotive lead acid storage batteries, improvement in charge acceptance has become a very important issue in order to make it possible to carry out high-efficiency discharge to a load with charging over a short period of time, and to improve the service life performance of batteries used under PSOC.

In a lead acid storage battery, the charge acceptance of the positive active material is inherently high, but the charge acceptance of the negative active material is poor. Therefore, the charge acceptance of the negative active material must be improved in order to improve the charge acceptance of a lead acid storage battery. For this reason, efforts have been made almost exclusively to improve the charge acceptance of the negative active material. Patent Documents 1 and 2 propose improvement in the charge acceptance and service life of a lead acid storage battery under PSOC by increasing the carbonaceous electrically conductive material added to the negative active material.

However, these proposals are limited to valve regulated lead acid storage batteries in which electrolyte is impregnated in the separators, which are referred to as retainers, and free electrolyte is not allowed to be present within the container; and application cannot be made to a flooded-type lead acid storage battery having free electrolyte from

the separators in the container. In a floodedtype lead acid storage battery, it is possible to consider increasing the amount of carbonaceous electrically conductive material added to the negative active material, but when the amount of carbonaceous electrically conductive material added to the negative active material is increased excessively in a flooded-type lead acid storage battery, the carbonaceous electrically conductive material in the negative active material bleeds into the electrolyte and pollutes the electrolyte, and in the worst case, causes internal shorting. Therefore, the amount of carbonaceous electrically conductive material added to the negative active material must be limited in a flooded-type lead acid storage battery, and there is a limit to improving the charge acceptance for the entire lead acid storage battery by adding carbonaceous electrically conductive material to the negative active material.

A valve regulated lead acid storage battery has low battery capacity because the amount of electrolyte is limited, and suffers from a phenomenon referred to as heat runaway when the service temperature is high, and use must therefore be avoided in high temperature environments such as an engine compartment. For this reason, the battery must be mounted in the luggage compartment or the like in the case that a valve regulated lead acid storage battery is used in an automobile. However, when the battery is mounted in the luggage compartment or the like, the wire harnessing is increased and this is not preferred. A flooded-type lead acid storage battery which does not have such a restriction is preferably used as an automotive lead acid storage battery. Therefore, there is an urgent need to improve the charge acceptance of a flooded-type lead acid storage battery.

On the other hand, in a lead acid storage battery, an organic compound that acts to suppress coarsening of the negative active material is added to the negative active material in order to reduce the coarsening of the negative active material produced in accompaniment with charging and discharging, to suppress a reduction in the surface area of the negative plate, and to maintain high reactivity in the charging and discharging reactions. Lignin as a main component of wood is conventionally used as the organic compound for suppressing the coarsening of the negative active material. However, lignin has a wide variety of chemical structures in which a plurality of unit structures are bonded in complex ways, and ordinarily has a carbonyl group and other portions that are readily oxidized or reduced. These portions are therefore oxidized or reduced and decomposed when the lead acid storage battery is charged and discharged. Accordingly, the effect of suppressing a reduction in performance by adding lignin to the negative active material cannot be maintained over a long period of time. Lignin has a side effect in that charging and discharging reactions of the negative active material are obstructed and improvement of the charge acceptance is limited because lignin adsorbs to lead ions eluted out from lead sulfate during charging, and reactivity of the lead ions is reduced. Therefore, lignin added to the negative active material improves discharge characteristics, but there is a problem in that lignin improves charge acceptance.

In view of the above, there has also been a proposal to add sodium lignin sulfonate in which a sulfone group has been introduced in the $\alpha$ position of the side chain of the phenylpropane structure, which is the basic structure of lignin; a bisphenol aminobenzenesulfonic acid formaldehyde condensate; or the like to the negative active material in place of lignin.

For example, disclosed in Patent Documents 3 and 4 is the addition of a carbonaceous electrically conductive material, and a bisphenol aminobenzenesulfonic acid formaldehyde condensate to the negative active material. In Patent Document 4 in particular, it is disclosed that a bisphenol aminobenzenesulfonic acid formaldehyde condensate is selected as the organic compound for suppressing the coarsening of lead sulfate due to charging and discharging; the effect of suppressing coarsening of the lead sulfate particle is maintained; and a carbonaceous electrically conductive material is added in order to improve charge acceptance. It is disclosed in Patent Document 5 that electrically conductive carbon and activated carbon are added to the negative active material to improve discharge characteristics under PSOC.

Furthermore, it is disclosed in Patent Document 6 (Japanese Laid-open Patent Application No. 10-40907) that the specific surface area of the positive active material is increased to increase the discharge capacity. The positive active material is made smaller and the specific surface area is increased by adding lignin to the electrolyte when the battery undergoes chemical conversion. The invention disclosed in Patent Document 6 is used for increasing the discharge capacity of a battery, and no appreciable effect is obtained in terms of improving cycle endurance under PSOC and charge acceptance required in a lead acid storage battery for an ISS vehicle and a power generation and control vehicle.

[Prior Art Documents]

[Patent Documents]

[Patent Document 1] Japanese Laid-open Patent Application No. 2003-36882
[Patent Document 2] Japanese Laid-open Patent Application No. 07-201331
[Patent Document 3] Japanese Laid-open Patent Application No. 11-250913

[Patent Document 4] Japanese Laid-open Patent Application No. 2006-196191
[Patent Document 5] Japanese Laid-open Patent Application No. 2003-051306
[Patent Document 6] Japanese Laid-open Patent Application No. 10-40907 JP2004 127585A, JP2003 338284A, US6 074 782, WO2005/124920 and JP2008 277244 each disclose lead-acid batteries comprising a negative electrode plate including a condensate of a bisphenol and a sulfonic acid.

JP2002 231247 and JP2002 141066 each describe the use of a carbonaceous material, such as flaky graphite, as a conductive agent for negative or positive electrode compositions of lead acid batteries.

## DISCLOSURE OF THE INVENTION

[Problems the Invention Is Intended to Solve]

As described above, conventional proposals have focused on improving performance of negative active material in order to improve the charge acceptance of a flooded-type lead acid storage battery and to improve service life performance under PSOC. However, there is a limit to improving the charge acceptance and service life performance under PSOC and it is difficult to make further improvements in the performance of a lead acid storage battery used under PSOC by only improving the charge acceptance of the negative active material and improving the service life performance.

An object of the present invention is to further improve charge acceptance and service life performance under PSOC in a flooded-type lead acid storage battery in which charging is carried out intermittently in a short period of time and high efficiency discharging to a load is carried out in a partial state of charge.

[Means for Solving These Problems]

The present invention relates to a flooded-type lead acid storage battery having a configuration in which a plate pack is accommodated in a container together with an electrolyte, the plate pack being obtained by stacking separators between negative plates comprising a negative active material packed into a negative collector and positive plates comprising a positive active material packed into a positive collector, the invention having the characterizing features of claim 1.

In the present invention, at least a carbonaceous electrically conductive material and an organic compound (hereinafter referred to as "organic compound for reducing coarsening of the negative active material") that acts to reduce the coarsening of the negative active material due to repeated charging and discharging are added to the negative active material. Also, the positive plate is one in which the specific surface area of the active material is set to 6 $m^2/g$ or more.

The present inventor found that when the specific surface area of the positive active material is improved, it is possible to reduce the reaction overvoltage in the charging reactions of a positive active material, to facilitate the progress of charging reactions, and to improve the charge acceptance of the positive active material; and it is possible to further improve the charge acceptance of the entire lead acid storage battery in comparison with a conventional lead acid storage battery and to further improve the service life performance of a lead acid storage battery under PSOC by using the positive plate having improved charge acceptance described above together with a negative plate (hereinafter referred to as "performance-improved negative plate") in which at least a carbonaceous electrically conductive material and an organic compound for suppressing the coarsening of the negative active material have been added to the negative active material to thereby improve charge acceptance and service life performance.

In the case that the specific surface area of the positive active material is less than 6 $m^2/g$, a dramatic effect of improving the charge acceptance of the entire lead acid storage battery cannot be obtained, but when the specific surface area of the positive active material is set to 6 $m^2/g$ or more, a dramatic effect of improving the charge acceptance of the entire lead acid storage battery can be obtained. When the charge acceptance of the entire lead acid storage battery can be improved, high-efficiency discharge to a load under PSOC (partial state of charge) can be carried out without obstruction, and it is possible to reduce the coarsening of lead sulfate as the discharge product when charging and discharging is repeatedly carried out in a state of insufficient charge. Therefore, the service life performance of a battery used under PSOC can be improved.

When the specific surface area of the positive active material is excessively increased, the positive active material becomes too fine, the structure of the active material is destroyed by repeated charging and discharging, and a phenomenon referred to as so-called "sludge formation" occurs. As a result, the service life of the positive plate is reduced and a lead acid storage battery that can withstand practical use cannot be obtained. Therefore, the specific surface area of the positive active material cannot be increased to unreasonable levels. According to experimentation, the charge acceptance and service life performance of a battery is improved when the specific surface area of the positive active material is 6 $m^2/g$ or more. There is concern that the positive active material will become a sludge when the specific surface area of the positive active material is excessively high, and it is preferred that the specific surface area

of the positive active material not exceed 13 $m^2/g$. Therefore, the specific surface area of the active material of the positive plate is preferably 13 $m^2/g$ or less.

In other words, when a lead acid storage battery is assembled using a negative plate in which performance has been improved by adding to the negative active material at least a carbonaceous electrically conductive material and an organic compound for reducing the coarsening of the negative active material due to charging and discharging, and by using a positive plate in which the specific surface area of the active material of the positive plate has been set to 6 $m^2/g$ or more and 13 $m^2/g$ or less, it is possible to further improve charge acceptance in comparison with a conventional lead acid storage battery in which the charge acceptance have been improved by exclusively enhancing the performance of the negative plate. It is possible obtain a lead acid storage battery that achieves high-efficiency discharge to a load under PSOC, to reduce coarsening of lead sulfate, which is a discharge product, brought about by repeated charging and discharging in a state of insufficient charge, and to improve the service life performance when the lead acid storage battery is used under PSOC.

In the present invention, the carbonaceous electrically conductive material to be added to the negative active material in order to improve the charge acceptance of the negative active material is flake graphite. The average primary particle diameter of flake graphite is 100 $\mu m$ or more.

The electrical resistance of flake graphite is one order of magnitude less than the electrical resistance of acetylene black or another carbon black. Therefore, the electrical resistance of the negative active material can be reduced and the charge acceptance can be improved when flake graphite is used as the carbonaceous electrically conductive material to be added to the negative active material.

Charging reactions of the negative active material depend on the concentration of lead ions dissolved from the lead sulfate, which is a discharge product, and the charge acceptance increases as the quantity of lead ions increases. The carbonaceous electrically conductive material added to the negative active material has the effect of finely dispersing the lead sulfate generated by the negative active material during discharge. When charging and discharging cycles are repeated in a state of insufficient charge, the lead sulfate as a discharge product becomes coarse, the concentration of lead ions dissolved in the negative active material is reduced, and the charge acceptance is reduced, but if a carbonaceous electrically conductive material is added to the negative active material, coarsening of the lead sulfate is suppressed, the lead sulfate is kept in a fine state, and the concentration of lead ions dissolved from the lead sulfate can be kept high. Therefore, the charge acceptance of the negative plate can be kept high over a long period of time.

The organic compound added to the negative active material for reducing coarsening of the negative active material due to charging and discharging has bisphenol aminobenzenesulfonic acid formaldehyde condensate as a main component.

In this case, it was found by experimentation that favorable results can be obtained by using the bisphenolA aminobenzenesulfonic acid formaldehyde condensate expressed in chemical structure formula of Chemical formula 1 noted below as the bisphenol aminobenzenesulfonic acid formaldehyde condensate.

[Chemical formula 1]

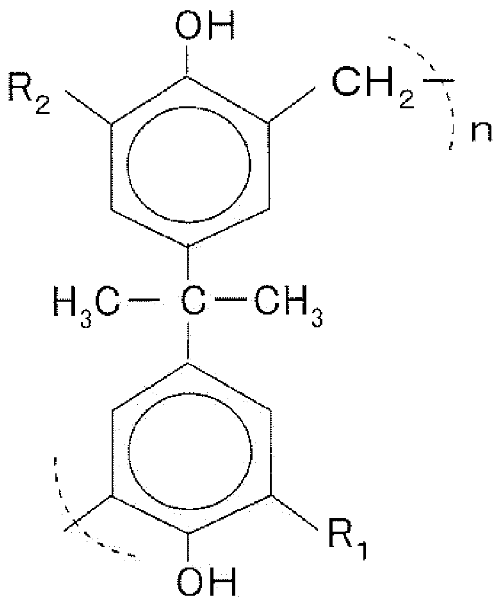

where $R_1$, $R_2$ are hydrogen or

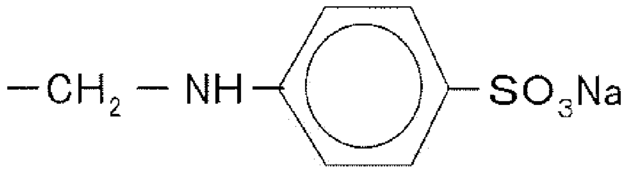

(excluding the case in which $R_1$, $R_2$ are both hydrogen)

The bisphenol aminobenzenesulfonic acid formaldehyde condensate has the effect of suppressing coarsening of the negative active material in the same manner as does lignin, and furthermore does not have a portion that is readily oxidized or reduced during charging and discharging of the lead acid storage battery. Therefore, the effect of suppressing the coarsening of the negative active material due to charging and discharging can be maintained when the above-described condensate is added to the negative active material. Since lignin adsorbs to lead ions eluted out from lead sulfate during charging and reactivity of the lead ions is reduced, there is a side effect in that charging and discharging reactions of the negative active material are obstructed and improvement of the charge acceptance is limited. However, the condensate described above has little side effect that obstructs charging and discharging reactions because the amount adsorbed to the lead ions is low in comparison with lignin. Therefore, the improved charge acceptance of the negative active material can be maintained, a reduction in charging and discharging reactivity due to repeated charging and discharging can be suppressed, and the charge acceptance and service life performance of the negative plate can be improved when a bisphenol aminobenzenesulfonic acid formaldehyde condensate is added together with a carbonaceous electrically conductive material to the negative active material.

The surface facing the surface of the negative plate among the two surfaces in the thickness direction of the separator is preferably structured using a nonwoven comprising the fiber of at least one material selected from among the material group consisting of glass, pulp, and polyolefin, in the case that the organic compound for reducing the coarsening of negative active material due to charging and discharging is one having a bisphenol aminobenzenesulfonic acid formaldehyde condensate as the main component, and the carbonaceous electrically conductive material is at least one selected from the material group consisting of graphite, carbon black, activated carbon, carbon fiber, and carbon nanotubes.

In the case that a separator configured in the manner described above is used, it has been confirmed by experimentation that particularly advantageous effects can be obtained when the specific surface area of the active material of the positive plate is in a range of 6 $m^2/g$ or more, and preferably 13 $m^2/g$ or less. It is apparent that the present invention yields a dramatic effect of improving the service life performance under PSOC and the charge acceptance of a lead acid storage battery by using a combination of a positive plate in which the specific surface area of the active material has been set in a suitable range, and a negative plate in which performance (charge acceptance and service life performance) has been improved. A negative plate preferably has the highest charge acceptance and service life performance possible. In the present invention, there is no particular limitation to the amount of carbonaceous electrically conductive material added to the negative active material for improving the charge acceptance of the negative plate and the amount of the organic compound added to the negative active material for reducing charging and discharging-induced coarsening of negative active material, however, the amount of the above-described additives is naturally set so as to improve the performance of the negative plate to the extent possible in the implementation of the present invention.

[Effect of the Invention]

In accordance with the present invention, there is provided a configuration that combines the use of a positive plate having improved charge acceptance by setting the specific surface area of the positive active material to 6 $m^2/g$ or more and preferably 13 $m^2/g$ or less, and a negative plate having improved charge acceptance and service life performance by adding to the negative active material a carbonaceous electrically conductive material and an organic compound for reducing the coarsening of the negative active material. The charge acceptance of an entire lead acid storage battery can thereby be improved in comparison with a conventional lead acid storage battery in which the charge acceptance has been improved entirely by enhancing the negative plate. Therefore, not only is it possible to enable high-efficiency discharge to a load under PSOC, but it is also possible to reduce the coarsening of lead sulfate brought about by repeated charging and discharging in a state of insufficient charge, and to improve service life performance under PSOC.

In the present invention, the charge acceptance and service life performance of a lead acid storage battery can be dramatically improved in the particular case that the organic compound added to the negativeplate active material for reducing the coarsening of the negative active material due to charging and discharging is one that uses a bisphenol aminobenzenesulfonic acid formaldehyde condensate as the main component to reduce side effects in which charging reactions are obstructed.

BRIEF DESCRIPTION OF THE DRAWINGS

FIG. 1 is a diagram showing the relationship between the charging current and the potential of the negative plate and positive plate for the case in which an automotive lead acid storage battery having an open circuit voltage of 12 V is being charged and the charging voltage is 14 V (constant); and

FIG. 2 is a spectral diagram showing the result of extracting the formaldehyde condensate of bisphenolA aminobenzene sodium sulfonate from the negative plate after formation and measuring the spectrum by NMR spectroscopy.

BEST MODE FOR CURRYING OUT THE INVENTION

The lead acid storage battery according to the present invention is advantageously used in ISS vehicles, power generation and control vehicles, and other micro-hybrid vehicles as a flooded-type lead acid storage battery in which charging is carried out intermittently and high-efficiency discharging to a load is carried out in a partial state of charge. The lead acid storage battery according to the present invention has a configuration which a plate pack is accommodated in a container together with an electrolyte, the plate pack being configured by stacking separators between negative plates composed of negative active material packed into a negative collector and positive plates composed of positive active material packed into a positive collector. The basic configuration is the same as a conventional lead acid storage battery.

Efforts have heretofore been made to improve charge acceptance exclusively in the negative plate in order to improve charge acceptance in a lead acid storage battery, but in the present invention, charge acceptance is improved in the negative plate as well as in the positive plate, and a negative plate having improved charge acceptance and a positive plate having improved charge acceptance are used in combination, whereby further improvement in the charge acceptance of a lead acid storage battery is obtained, coarsening of lead sulfate due to repeated charging and discharging in an state of insufficient charge is reduced, and service life performance is further improved. The basic technical concepts of the present invention will be described prior to the description of the example of the present invention.

As a result of analyzing the relationship between the charging current and changes in the potential of the positive plate during charging, and the relationship between the charging current and changes in the potential of the negative plate, the inventor found that when the charge acceptance of the positive plate is improved for the case in which there is used a negative plate having improved charge acceptance by reducing reaction overvoltage, the charge acceptance of an entire lead acid storage battery can be improved over a conventional lead acid storage battery in which only the charge acceptance of the negative plate has been improved. When charge acceptance can be improved, high-efficiency discharge to a load under PSOC can be carried out without obstruction. It is also possible to reduce the coarsening of lead sulfate as the discharge product when charging and discharging is repeatedly carried out in a state of insufficient charge, and to improve service life performance.

FIG. 1 shows the relationship between the charging current and the potential of the negative plate and positive plate for the case in which an automotive lead acid storage battery having an open circuit voltage of 12 V is being charged and the charging voltage is 14 V (constant). In FIG. 1, the vertical axis shows the charging current and the horizontal axis shows the potential of the positive plate and negative plate measured in relation to a standard hydrogen electrode (vs. SHE). In the diagram, N1 and N2 show curves of the charging current vs. potential of the negative plate, and P1 and P2 show curves of the charging current vs. potential of the positive plate. Curves of the charging current vs. potential of the negative plate should normally be illustrated in the third quadrant of an orthogonal coordinate system, but to facilitate description in FIG. 1, the curves of the charging current vs. potential of the negative plate are shown in the first quadrant together with the curves of the charging current vs. potential of the positive plate with the polarity of the current and potential inverted.

In FIG. 1, N1 shows a curve of the charging current vs. potential for the case in which the overvoltage of the charging reaction carried out on the negative plate is high in comparison with N2. When the overvoltage of the charging reaction is high, the curve of the charging current vs. potential of the negative plate has a shape that considerably bulges outward in the manner of N1 in the diagram, but when the overvoltage is low, a curve that is more erect than N1 is obtained in the manner of N2.

P1 shows a curve of the charging current vs. potential for the case in which the overvoltage of the charging reaction carried out on the positive plate is high in comparison with P2. The curve of the charging current vs. potential P1 in the case that the overvoltage is high has a shape that bulges further outward than P2 in the diagram, but when the reaction overvoltage is low, the curve is more erect than P1.

Here, the overvoltage $\eta$ of the charging reaction is the amount of change in the potential produced in each electrode when the charging voltage is applied in an open-circuit state. The overvoltage $\eta$ is the absolute value of the difference between the potential of the electrodes and the equilibrium potential (open-circuit voltage) when the charging voltage is applied, i.e., $\eta$ = | electrode potential equilibrium potential when the charging voltage is applied |.

The curve of the charging current vs. potential of a negative plate which has not been particularly treated to improve the charge acceptance of the negative active material has a shape that bulges outward in the manner shown in N1 of FIG. 1, but the erect shape of N2 is a curve of the charging current vs. potential of a negative plate which has had a suitable amount of carbonaceous electrically conductive material and organic compound for reducing the coarsening of negative active material due to charging and discharging added to the negative active material to improve the charge acceptance.

The curve of the charging current vs. potential of a positive plate which has not been particularly treated to

improve the charge acceptance of the positive active material has a shape such as that shown by P1 of FIG. 1. P1 is a curve of the charging current vs. potential of a positive plate used in a conventional lead acid storage battery, and has a more erect curve than N1. This shows that inherently the charge acceptance of the negative plate is low and the charge acceptance of the positive plate is high in a lead acid storage battery. In the case that the overvoltage of the charging reaction of the positive plate is reduced to improved the charge acceptance of the positive plate, the curve of the charging current vs. potential of the positive plate has a more erect shape than P1, as shown by P2 of FIG. 1.

When a lead acid storage battery is assembled using a negative plate and positive plate which have N1 and P1 as characteristic curves of the charging current vs. potential, I11 is the charging current that flows when a charging voltage of 14 V is applied from a state of open-circuit voltage (12 V). The open-circuit voltage is the difference between the positive plate potential and the negative plate potential, and the 14 V to be applied is also the difference in the potential between the positive plate and the negative plate.

Next, a negative plate in which the overvoltage of the charging reaction is reduced to improve the charge acceptance so that the characteristics curve of the charging current vs. potential is N2, and a positive plate in which the curve of the charging current vs. potential is P1 were assembled into a lead acid storage battery. I21 (> I11) is the charging current that flows when a charging voltage of 14 V has been applied. It is apparent from the above that the charging current can be considerably increased even when the curve of the charging current vs. potential of the positive plate remains as P1 (even when the performance of the positive plate is not particularly improved). In other words, when the charge acceptance of the negative active material is improved so that the characteristics curve of the charging current vs. potential is N2, the charge acceptance of the entire lead acid storage battery can be dramatically improved even when the charge acceptance of the positive plate is not particularly improved.

Next, the positive plate in which the reaction overvoltage has been reduced so that the curve of the charging current vs. potential is P2 is combined with a negative plate in which the curve of the charging current vs. potential is N1 and a lead acid storage battery is assembled. I12 (> I11) is the charging current that flows when a charging voltage of 14 V has been applied. It is apparent from the above that the charging current can be improved even when a positive plate having a curve of the charging current vs. potential that is P1 and a negative plate having a curve of the charging current vs. potential that is N1 are used in combination. However, the charge acceptance cannot be improved to the extent of the case in which a positive plate having a curve of the charging current vs. potential that is P1 and a negative plate having a curve of the charging current vs. potential that is N2 are used in combination.

However, when a negative plate in which the overvoltage has been reduced so that the curve of the charging current vs. potential becomes N2 (charge acceptance has been improved) and a positive plate in which the overvoltage has been reduced so that the curve of the charging current vs. potential becomes P2 (charge acceptance has been improved) are combined together to assemble a lead acid storage battery, the charging current that flows when a charging current of 14 V is applied can be increased to I22 (> I11), and the charge acceptance of an entire lead acid storage battery can be greatly improved in comparison with the case in which only the charge acceptance of the negative plate has been improved.

The inventor found that the charge acceptance of an entire lead acid storage battery can be greatly improved in comparison with a conventional lead acid storage battery in which only the charge acceptance of the negative plate has been improved, by improving the charge acceptance of a positive plate as described above, and using the positive plate in combination with a negative plate in which the charge acceptance has been improved.

In view of the above, after thoroughgoing research into means for improving the charge acceptance of a positive plate and as the result of experimentation, it was found that the charge acceptance of the positive plate can be improved so that the curve of the charging current vs. potential becomes an erect curve such as P2 of FIG. 1 by increasing the specific surface area of the active material of the positive plate. It was also found that the charge acceptance of an entire lead acid storage battery can be further improved in comparison with a conventional lead acid storage battery in which charge acceptance of the entire battery is improved by only improving the charge acceptance of the negative plate, and that the service life performance under PSOC can be improved by assembling a lead acid storage battery using a combination of a positive plate in which the charge acceptance has been improved by setting the specific surface area of the active material in a range of 6 $m^2/g$ or more, and a negative plate in which the charge acceptance and service life performance have been improved by adding to the negative active material a carbonaceous electrically conductive material and an organic compound that has the effect of reducing the coarsening of negative active material that occurs in accompaniment with charging and discharging.

In the present embodiment, the specific surface area of the active material of the positive plate (also referred to as specific surface area of the positive active material) is defined in the following manner. In other words, measurement is carried out by a nitrogen gas adsorption method. This method is a common technique for measuring specific surface area, and is carried out by using an inert gas in which the size of a single molecule is known, causing the inert gas to be adsorbed on the surface of a measurement sample, and obtaining the surface area from the occupied surface area. Specifically, the measurement is carried out based on the BET described below.

The relation of formula (1) often holds true when P/Po is in the range of 0.05 to 0.35. Formula (1) is modified

(the numerator and denominator of the left side are divided by P) to obtain formula (2).

Gas molecules for which the adsorption occupied surface area is known are adsorbed on the sample for the total specific surface area used in the measurement, and the relationship between the adsorbed amount (V) and the relative pressure (P/Po) is measured. The left side of formula (2) and P/Po are plotted using the measured V and P/Po. Here, s is the slope and formula (3) is derived from formula (2).

With i indicating the intercept, the intercept i and the slope s are expressed in the formulas (4) and (5). Formulas (6) and (7) are modifications of formulas (4) and (5), respectively, formula (8) is obtained for calculating the monolayer adsorption amount $V_m$. In other words, the adsorption amount V at a certain relative pressure P/Po is measured at several points, and the slope and intercept of the plotted line are calculated to produce the monolayer adsorption amount $V_m$. The total surface area $S_{total}$ of a sample of obtained using formula (9), and the specific surface area S is calculated from the total surface area $S_{total}$ using formula (10).

[Formula 1]

$$\frac{P}{V(P_0 - P)} = \left(\frac{C-1}{V_m C}\right)\left(\frac{P}{P_0}\right) + \frac{1}{V_m C} \qquad \text{Formula (1)}$$

P: Adsorption equilibrium in a state of adsorption equilibrium at a constant temperature

$P_0$: Saturation vapor pressure at adsorption temperature

V: Adsorption amount at adsorption equilibrium pressure P

$V_m$: Monolayer adsorption amount (the adsorption amount when gas molecules have formed a monolayer on a solid surface)

C: BET constant (a parameter related to the interaction between the solid surface and the adsorptive substance)

[Formula 2]

$$\frac{1}{V\left(\frac{P_0}{P} - 1\right)} = \left(\frac{C-1}{V_m C}\right)\left(\frac{P}{P_0}\right) + \frac{1}{V_m C} \qquad \text{Formula (2)}$$

[Formula. 3]

$$s = \frac{C-1}{V_m C} = \frac{C}{V_m C} - \frac{1}{V_m C} = \frac{1}{V_m} - \frac{1}{V_m C} \qquad \text{Formula (3)}$$

[Formula 4]

$$i = \frac{1}{V_m C} \qquad \text{Formula (4)}$$

[Formula 5]

$$s = \frac{1}{V_m} - i \qquad \text{Formula (5)}$$

[Formula 6]

$$s \times V_m = 1 - i \times V_m \qquad \text{Formula (6)}$$

[Formula 7]

$$(s+i)V_m = 1 \quad \text{Formula (7)}$$

[Formula 8]

$$V_m = \frac{1}{s+i} \quad \text{Formula (8)}$$

[Formula 9]

$$S_{total} = (V_m \times N \times A_{CS})M \quad \text{Formula (9)}$$

$S_{total}$: Total surface area ($m^2$)
$V_m$: Monolayer adsorption amount (-)
N: Avogadro's number (-)
$A_{CS}$: Adsorption cross-sectional surface area ($m^2$)
M: Molecular weight (-)

[Formula 10]

$$S = \frac{S_{total}}{w} \quad \text{Formula (10)}$$

$S_{total}$: Specific surface area ($m^2/g$)
w: Sample amount (g)

A high specific surface area of the positive active material means that it is possible to maintain for a long period of time a state in which diffusion migration of lead ions ($SO_4^{2-}$) and hydrogen ions ($H^+$) as the reactive species of the discharge reaction is carried out in a rapid manner, and that the discharge reactions can be maintained over a long period of time. Maintaining the diffusion of the reactive species over a long period of time means that there are many diffusion paths for the reactive species.

On the other hand, diffusion paths for the sulfate ions and hydrogen ions generated in accompaniment with charging reactions are required in the charging reactions, and when the specific surface area of the positive active material is set at a high level, it is thought that many diffusion paths can be provided for the sulfate ions and hydrogen ions generated in accompaniment with charging reactions, and the products can be rapidly diffused without accumulating on the reaction surface of the plates. The charging reactions are thereby smoothly carried out over the entire plate, the progress of charging reaction is facilitated, and the charge acceptance of the positive plate can be improved.

In the present invention, at least a carbonaceous electrically conductive material and an organic compound for reducing the coarsening of negative active material due to charging and discharging are added to the negative active material in order to improve the performance of the negative plate.

The carbonaceous electrically conductive material is preferably selected from among the material group comprising of graphite, carbon black, activated carbon, carbon fiber, and carbon nanotubes. Preferred among these is graphite, and flake graphite is preferably selected as the graphite. In the case that flake graphite is used, the average primary particle diameter is preferably 100 μm or more. The amount of the carbonaceous electrically conductive material added is preferably in a range of 0.1 to 3 parts by mass in relation to 100 parts by mass of the negative active material (spongy lead) in a fully charged state.

The flake graphite noted above refers to the flake graphite described in JIS M 8601 (2005). The electrical resistance of the flake graphite is 0.02 Ω.cm or less and is one order of magnitude less than that of acetylene black or another carbon black, which is about 0.1 Ω·cm. Therefore, the electrical resistance of the negative active material is reduced and the charge acceptance can be improved by using flake graphite in place of a carbon black used in a conventional lead acid storage battery.

Here, the average primary particle diameter of flake graphite is obtained in accordance with the laser diffraction and scattering method of JIS M 8511 (2005). A flake graphite material was added in a suitable amount to an aqueous solution containing 0.5 vol. % of a commercially available surfactant polyoxyethylene octyl phenyl ether (e.g., Triton X-100 manufactured by Roche Diagnostics) as the dispersant, the system was exposed to 40 W ultrasonic waves for 180 seconds while being stirred, and the average particle diameter was then measured using a laser diffraction and scattering-type grain size distribution measurement device (e.g., Microtrac 9220 FRA manufactured by Nikkiso Co., Ltd.) to calculate the average primary particle diameter of the flake graphite. The value of the average particle diameter (median diameter: D50) thus calculated was used as the average primary particle diameter.

A lead acid storage battery mounted in an ISS vehicle, power generation and control vehicle, or other micro-hybrid vehicle is used in a partial state of charge referred to as PSOC. In a lead acid storage battery used under such conditions, lead sulfate, which is an insulator produced by the negative active material during discharge, gradually coarsens in accompaniment with repeated charging and discharging, and a phenomenon referred to as sulfation occurs prematurely. When sulfation occurs, the discharge performance and charge acceptance the negative active material is dramatically reduced.

The carbonaceous electrically conductive material added to the negative active material has the effect of suppressing the coarsening of the lead sulfate, keeping the lead sulfate in a fine state, suppressing a reduction in the concentration of lead ions that elute from the lead sulfate, and maintaining a state of high charge acceptance.

A negative plate that can maintain a state of high charge acceptance for a long period of time can be obtained without compromising the long-term reactivity of charging and discharging by adding to the negative active material a suitable amount of an organic compound for reducing the coarsening of negative active material due to charging and discharging.

It is possible to improve the charge acceptance of an entire battery merely by improving the performance of the negative plate by adding a carbonaceous electrically conductive material and organic compound for reducing the coarsening of negative active material as described above. However, the charge acceptance of an entire battery can be further improved by combining the above-noted negative plate with the positive plate described above.

A bisphenol aminobenzenesulfonic acid formaldehyde condensate is preferably used as the organic compound for reducing the coarsening of negative active material. The bisphenol is bisphenolA, bisphenolF, bisphenolS, or the like. Particularly preferred among the condensates described above is the bisphenolA aminobenzenesulfonic acid formaldehyde condensate expressed in the chemical structure of Chemical formula 1.

[Chemical formula 1]

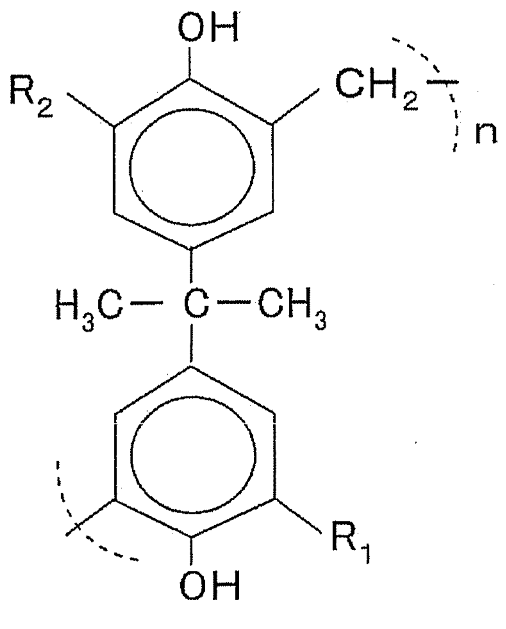

where $R_1$, $R_2$ are hydrogen or

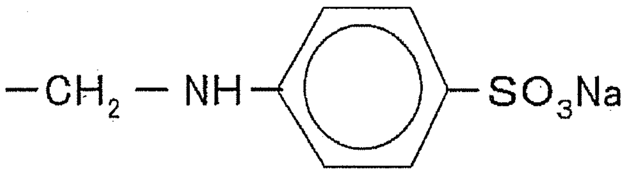

(excluding the case in which $R_1$, $R_2$ are both hydrogen)

As described above, the charging reactions of the negative active material depend on the concentration of lead ions dissolved from the lead sulfate, which is a discharge product, and the charge acceptance increases as the quantity of lead ions increases. Lignin is widely used as the organic compound added to the negative active material in order to reduce the coarsening of negative active material due to charging and discharging, but lignin has a side effect in that it adsorbs onto lead ions, reduces the reactivity of the lead ions, and therefore obstructs the charging reaction of the negative active material and limits improvement in the charge acceptance. In contrast, a bisphenol aminobenzenesulfonic acid formaldehyde condensate having the chemical structure formula of Chemical formula 1 noted above has weak adsorptive strength to lead ions and the adsorptive amount is low. Therefore, the condensate described above is used

in place of lignin, obstruction to charge acceptance is reduced, and obstruction to maintenance of the charge acceptance by addition of a carbonaceous electrically conductive material is reduced.

The present invention may also use the sodium lignin sulfonate expressed in the chemical structure formula (partial structure) of Chemical formula 2 below as the organic compound for reducing the coarsening of negative active material due to charging and discharging. Sodium lignin sulfonate is widely used as an organic compound for reducing the coarsening of negative active material, but there is a drawback in that it is highly adsorptive to lead ions and has the side effect of suppressing charging reactions. In contrast, a bisphenol aminobenzenesulfonic acid formaldehyde condensate has weak adsorptive strength to lead ions and the amount adsorb on the lead ions is low. Therefore, charging reactions are substantially uninhibited and charge acceptance is not obstructed.

[Chemical formula 2]

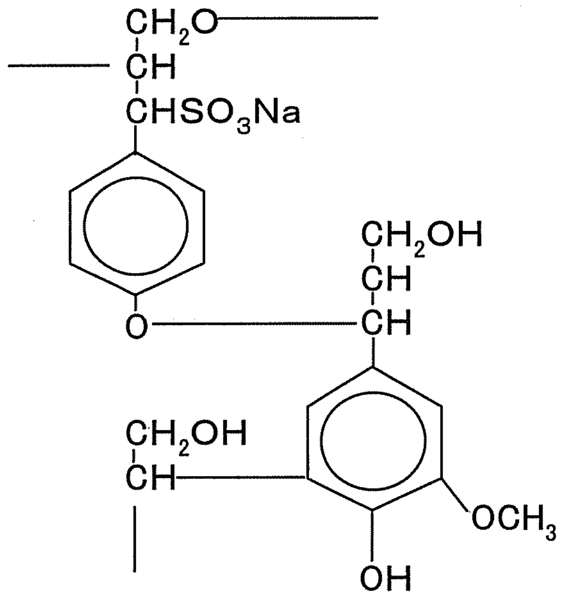

An ordinary polyethylene separator made of a microporous polyethylene sheet may be used as the separator in the implementation of the present invention, but it is preferred that the polyethylene separator not be used alone, but in combination with a separator composed of a nonwoven (hereinafter referred to as a "separator composed of a nonwoven") consisting of glass fiber, polyolefin (polyethylene, polypropylene, or the like) fiber, pulp, or the fiber of another material. In this case, the polyethylene separator and the separator composed of a nonwoven are superimposed so that the surface of the separator facing the negative plate is composed of a nonwoven. The separator composed of a nonwoven may be one having a mixture of a plurality of fibers selected from the materials noted above. The nonwoven composed of a mixture of a plurality of fibers is preferably one that is not limited to glass fibers alone, but is preferably one that is composed of a mixture of glass fibers and acid-resistant organic resin fibers, or one in which silica has been added to the mixture as required, such as the thin separator applied to a control valve-type lead acid storage battery disclosed in, e.g., Japanese Laid-open Patent Application No. 2002-260714.

Lead sulfate ions produced from lead sulfate during charging migrate downward through the surface of the plate. Since the battery does not become fully charged under PSOC, the electrolyte is not stirred by gas production. As a result, the concentration of the electrolyte becomes nonuniform, which is referred to as stratification, wherein the specific gravity of the electrolyte in the lower portion of the battery is increased and the specific gravity of the electrolyte in the upper portion is reduced. When such a phenomenon occurs, the charge acceptance and discharge performance are reduced because the reaction surface area is reduced. Stratification can be prevented because the descent of lead ions can be prevented when a highly porous separator composed of a nonwoven is made to face the surface of the negative plate. It is possible to improve the charge acceptance of an entire battery using such a separator alone, but the charge acceptance of an entire battery can be further improved by using such a separator in combination with the positive plate described above. The charge acceptance of an entire lead acid storage battery can be dramatically improved by using the separator in combination with the positive plate and negative plate described above.

[Examples]

First, an unformed positive plate was fabricated. Water was added to a mixture of lead oxide, red lead, and cut fiber (polyethylene terephthalate short fibers, likewise hereinbelow) and mixed, and the system was kneaded while adding dilute sulfuric acid in small amounts to manufacture a positive active material paste. The active material paste was packed into an expanded-type collector fabricated by expansion-machining a rolled sheet composed of a lead alloy, and the assembly was aged for 24 hours at 40°C in an atmosphere at 95% humidity and then dried to fabricate an unformed positive plate.

Next, a n unformed negative plate was fabricated. Water was added to a mixture of lead oxide, cut fiber, barium sulfate, carbonaceous electrically conductive material, and an organic compound for reducing the coarsening of negative active material and mixed, and the system was kneaded while adding dilute sulfuric acid in small amounts to manufacture a negative active material paste. The active material was packed into an expanded-type collector fabricated by expansion-machining a rolled sheet composed of a lead alloy, and the assembly was aged for 24 hours at 40°C in an atmosphere at 95% humidity and then dried to fabricate an unformed negative plate. Here, the negative plates A, B, C, B' described below were fabricated by varying the carbonaceous electrically conductive material and the organic compound for reducing the coarsening of negative active material.

Negative plate A: (not according to the invention)

An organic compound in which sodium lignin sulfonate expressed in Chemical formula 2 was used as the main component was selected as the organic compound for reducing the coarsening of negative active material, and carbon black (specific surface area: 260 $m^2/g$) obtained from heavy fuel oil as the starting material was used as the carbonaceous electrically conductive material and the addition amount was 0.2 parts by mass in relation to 100 parts by mass of the active material.

Negative plate B: (not according to the invention)

An organic compound in which bisphenolA aminobenzenesulfonic acid formaldehyde condensate (molecular weight: 17,000 to 20,000; sulfur content in the compound: 6 to 11 mass%) expressed in Chemical formula 1 was used as the main component was selected as the organic compound for reducing the coarsening of negative active material, and the carbon black described above was used as the carbonaceous electrically conductive material and the addition amount was 0.2 parts by mass in relation to 100 parts by mass of the active material.

Negative plate C:

An organic compound in which bisphenolA aminobenzenesulfonic acid formaldehyde condensate (molecular weight: 17,000 to 20,000; sulfur content in the compound: 6 to 11 mass%) expressed in Chemical formula 1 was used as the main component was selected as the organic compound for reducing the coarsening of negative active material, and flake graphite (average primary particle diameter: 180 μm) was used as the carbonaceous electrically conductive material and the addition amount was 0.2 parts by mass in relation to 100 parts by mass of the active material.

Negative plate B': (not according to the invention)

An organic compound in which bisphenolA aminobenzenesulfonic acid formaldehyde condensate (molecular weight: 17,000 to 20,000; sulfur content in the compound: 6 to 11 mass%) expressed in Chemical formula 1 was used as the main component was selected as the organic compound for reducing the coarsening of negative active material, and a carbonaceous electrically conductive material was not added.

Next, lead acid storage batteries were assembled using a combination of the negative plates A, B, C, and B', positive plates, and two types of separators. The assembly of the batteries was carried out by stacking the positive plates and negative plates in alternating fashion via separator to form a plate pack composed of six positive plates and seven positive plates, and the head sections of the plates of the same polarity were welded together using a cast-on strap (COS) method to fabricate a plate pack. The assembled batteries were D23 size.

Here, a separator P was a separator in which a polyethylene separator was used alone, and a separator Q was a separator having a structure in which a nonwoven composed of glass fiber was disposed on the surface of a polyethylene separator facing the surface of a negative plate.

In the present example, a glass fiber nonwoven was used as the nonwoven constituting the separator Q, but it is also possible to use a nonwoven composed of polyethylene, polypropylene, or another polyolefin material, or pulp or another material fiber in places of the glass fiber nonwoven, and it is also possible to use a nonwoven composed of

a mixture of a plurality of these material fibers. A nonwoven composed of a mixture of a plurality of fibers selected from the materials described above is preferably used as the nonwoven used as a separator, and even more preferred is a nonwoven composed of a mixture of these fibers into which silica has been filtered by paper-making techniques.

In the present example, the separator Q was formed by superimposing a nonwoven composed of glass fiber on a polyethylene separator, but the separator Q may be solely composed of a nonwoven made of glass fiber or the like. In other words, the separator Q may be configured so that the surface facing the negative plate is composed of a nonwoven made of glass, polyolefin, pulp, or another material fiber.

Next, the negative and positive plates were formed in container. Namely dilute sulfuric acid having a specific gravity of 1.24 was injected into the container, the batteries were energized and charged with 200% electric amount of the theoretical capacity based on the amount of active material to complete the lead acid storage batteries. The characteristics of the positive active material varied depending on the temperature, current density, and electrolyte specific gravity during formation. The specific surface area of the positive active material can be reduced when the formation temperature is increased, and can be increased when the electrolyte specific gravity is increased. In view of this fact, various batteries having different specific surface areas of the active material of the positive plate were prepared by adjusting the temperature and electrolyte specific gravity during formation in containers. The specific surface area of the positive active material can be adjusted in accordance with the formation conditions described above, and also by suitably selecting, e.g., the starting material of the lead powder, the lead powder kneading conditions, the plate aging conditions, and the like. Even if means for preparing the specific surface area of the positive active material differ, the prescribed effects of the present invention can be obtained as a result as long as the specific surface area of the active material is in the range of the present invention.

The specific surface area of the positive active material was measured using a battery for measuring the active material characteristics. The battery was disassembled and the positive plates removed from such a battery were provided in measurements using the method described in an earlier section.

Nuclear magnetic resonance (NMR) spectroscopy was used to confirm the presence of the bisphenolA aminobenzenesulfonic acid formaldehyde condensate expressed in Chemical formula 1 in the negative active material. The following analysis was carried out using an NMR spectroscopy device (ECA- 500FT-NMR) manufactured by JEOL Ltd.

First, the lead acid storage batteries of the example 1 following formation were disassembled and the negative plates were removed. The removed negative plates were washed and the sulfuric acid content was washed away. The negative active material following formation is a spongy lead. The negative plates were dried in nitrogen or another inert gas in order to prevent oxidation of the negative active material. The negative active material was removed from the dried negative plates and pulverized. The pulverized powder was added to a solution of 10 % sodium hydroxide and the extract excluding the generated precipitant (lead hydroxide) was analyzed and measured using the device described above. The measurement conditions are listed in Table 1.

[Table 1]

| | |
|---|---|
| Measurement nuclide | $^1H$ |
| Magnetic field intensity | 11.747 T (500 MHz with $^1H$ nuclide |
| Observation range | - 3 ppm to 15 ppm |
| Data points | 16,384 points |
| Measurement mode | Non-decoupling |
| Pulse wait time | 7 sec. |
| Cumulative cycles | 128 cycles |
| Measurement solvent | Heavy water |
| Measurement temperature | Room temperature |

FIG. 2 shows a spectral diagram measured by NMR spectroscopy. The horizontal axis shows the chemical shift (ppm) and the vertical axis shows the peak intensity.

As shown by the double circles in FIG. 2, peaks originating from the $p^-$ aminobenzenesulfonic acid in the bisphenol aminobenzenesulfonic acid formaldehyde condensate expressed in Chemical formula 1 were observed at chemical shifts of 6.7 ppm and 7.5 ppm. As shown by the triangle in FIG. 2, a peak originating from the bisphenolA backbone of the bisphenolA aminobenzenesulfonic acid formaldehyde condensate expressed in Chemical formula 1 were observed in the chemical shift range of 0.5 ppm to 2.5 ppm.

Based on the results noted above, the bisphenolA aminobenzenesulfonic acid formaldehyde condensate expressed in Chemical formula 1 was observed in the negative active material.

The configurations of the plate pack fabricated in the present example are the following seven types.

[Type 1] (not according to the invention)

Positive plate: The specific surface area of the positive active material was varied in six steps from 5 $m^2/g$ to 14.1 $m^2/g$.

Negative plate: Negative plate B in which the added amount of carbon black was 0.2 parts by mass in relation to 100 parts by mass of the active material, and in which the organic compound expressed in Chemical formula 1 was used as the organic compound for reducing the coarsening of negative active material. Here, 100 parts by mass of active material refers to 100 parts by mass of active material (spongy lead) in a fully charged state. The same applies hereinbelow.

Separator: Polyethylene separator P

[Type 2] (not according to the invention)

25 Positive plate: The specific surface area of the positive active material was varied in six steps from 5 $m^2/g$ to 14.1 $m^2/g$.

Negative plate: Negative plate B in which the added amount of carbon black was 0.2 parts by mass in relation to 100 parts by mass of the active material, and in which the organic compound expressed in Chemical formula 1 was used as the organic compound for reducing the coarsening of negative active material.

Separator: Separator Q made of a nonwoven composed a polyethylene separator and glass fiber.

[Type 3] (not according to the invention)

Positive plate: The specific surface area of the positive active material was varied in six steps from 5 $m^2/g$ to 14.1 $m^2/g$.

Negative plate: Negative plate A in which the added amount of carbon black was 0.2 parts by mass in relation to 100 parts by mass of the active material, and in which the organic compound expressed in Chemical formula 2 having sodium lignin sulfonate as a main component has been selected as the organic compound for reducing the coarsening of negative active material.

Separator: Polyethylene separator P

[Type 4] (not according to the invention)

Positive plate: The specific surface area of the positive active material was varied in six steps from 5 $m^2/g$ to 14.1 $m^2/g$.

Negative plate: Negative plate A in which the added amount of carbon black was 0.2 parts by mass in relation to 100 parts by mass of the active material, and in which the organic compound expressed in Chemical formula 2 having sodium lignin sulfonate as a main component has been selected as the organic compound for reducing the coarsening of negative active material.

Separator: Separator Q made of a nonwoven composed a polyethylene separator and glass fiber.

[Type 5]

Positive plate: The specific surface area of the positive active material was varied in six steps from 5 $m^2/g$ to 14.1 $m^2/g$.

Negative plate: Negative plate C in which the added amount of flake graphite was 2 parts by mass in relation to 100 parts by mass of the active material, and in which the organic compound expressed in Chemical formula 1 was used as the organic compound for reducing the coarsening of negative active material.

Separator: Polyethylene separator P

[Type 6]

Positive plate: The specific surface area of the positive active material was varied in six steps from 5 $m^2/g$ to 14.1 $m^2/g$.
Negative plate: Negative plate C in which the added amount of flake graphite was 2 parts by mass in relation to 100 parts by mass of the active material, and in which the organic compound expressed in Chemical formula 1 was used as the organic compound for reducing the coarsening of negative active material.
Separator: Separator Q made of a nonwoven composed a polyethylene separator and glass fiber.

[Type 7] (not according to the invention)

Positive plate: The specific surface area of the positive active material was varied in six steps from 5 $m^2/g$ to 14.1 $m^2/g$.
Negative plate: Negative plate B' in which a carbonaceous electrically conductive material was not added, and in which the organic compound expressed in Chemical formula 1 was used as the organic compound for reducing the coarsening of negative active material.
Separator: Separator Q made of a nonwoven composed a polyethylene separator and glass fiber.

In the present example, the specific surface area of the positive active material was measured by the nitrogen gas adsorption method described above. In other words, S obtained by Formula 10 described above is the specific surface area of the positive active material.
The charge acceptance and cycling characteristics were measured for the lead acid storage batteries having the plate pack configurations of types 1 to 7. First, the charge acceptance was measured in the following manner. The initially assembled lead acid storage batteries were placed in a thermostat at 25°C and the SOC (state of charge) brought to 90% of a fully charged state. The charge current value at the fifth second (fifth-second charge current value) from the start of application of a charge voltage of 14 V (wherein the current prior to reaching 14 V was limited to 100 A) was measured. The higher the fifth-second charge current value is the higher the initial charge acceptance is. A cycling test was carried out for 5000 cycles in a thermostat at 40°C, wherein a single cycle comprising charging for 10 minutes at a charge voltage of 14.8 V (wherein the current prior to reaching 14.8 V was limited to 25 A) and discharging for 4 minutes with a constant discharge current of 25 A. The charge acceptance was measured under the same conditions used initially above. In other words, the higher the fifth-second charge current value is after 5000 cycles, the better the initially good charge acceptance has been maintained thereafter.
The measurement (service life test) of the cycling characteristics was carried out in the following manner. The ambient temperature was adjusted so as to bring the battery temperature to 25°C, and a cycling test was carried out by discharging at a constant current of 45 A for 59 seconds and 300 A for 1 second, and then charging at a constant current of 100 A and constant voltage of 14 V for 60 seconds, the above discharging and charging constituting a single cycle. This test is a cycling test for simulating the use of a lead acid storage battery in an ISS vehicle. In this service life test, charging gradually becomes insufficient when full charging is not carried out, because the amount of charge is low in relation to the amount of discharge, and as a result, there is a gradual decline in the first-second voltage, which is one second of discharge carried out at a discharge current of 300 A. In other words, when the negative plate is polarized during constant current/constant voltage charging and a switch is prematurely made to constant voltage charging, the charge current weakens and charging becomes insufficient. In this service life test, the battery was judged to have reached the end of its service life when the first second voltage at 300-A discharge dropped below 7.2 V.
The state of insufficient discharge continues and cycling characteristics are degraded when a high charge acceptance cannot be maintained during charging and discharging cycles. The level of charge acceptance during charging and discharging cycles are optimally evaluated by evaluating the cycling characteristics and changes in the fifth-second charge current value that accompany the charging and discharging cycles.
The charge acceptance during constant voltage charging and the durability under PSOC can be evaluated using the test described above.
Tables 2 to 8 show the measurement results of the cycling characteristics and the fifth-second charge current carried for the type 1 to 7 lead acid storage batteries having the plate pack configuration of types 1 to 7.
In Tables 2 to 4, the conventional example is the case in which the specific surface area of the positive active material was set to 5 $m^2/g$; and Tables 5 to 7 are comparative examples in which the specific surface area of the positive active material was set to 5 $m^2/g$. All of the examples in Table 8 are reference examples in which carbonaceous electrically conductive material was not added to the negative active material and the specific surface area of the positive active material was set to from 5 $m^2/g$ to 14.1 $m^2/g$. The fifth-second charge current and cycling characteristics shown in each table were evaluated with the conventional example of Table 4 set to 100 (with the fifth-second charge current initially

set to 100).

[Table 2] (not according to the invention)

| (Measurement results for the type 1 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | after 5000 cycles | | |
| 1 | 5.0 $m^2/g$ | B | P | 160 | 95 | 190 | Conv. example |
| 2 | 6.0 | | | 172 | 103 | 195 | Examples |
| 3 | 7.4 | | | 180 | 107 | 200 | |
| 4 | 8.8 | | | 192 | 112 | 203 | |
| 5 | 13.0 | | | 198 | 113 | 205 | |
| 6 | 14.1 | | | 205 | 113 | 198 | |

Based on the results above, it is apparent that charge current (charge acceptance) and cycling characteristics (service life performance under PSOC) can be dramatically improved in comparison with the conventional example when the condensate of Chemical formula 1 is used as the main component of an organic compound for reducing the coarsening of negative active material, even when the specific surface area of the positive active material is 5 $m^2/g$. The fifth-second charge current and cycling characteristics can be clearly improved by setting the specific surface area of the positive active material to be 6 $m^2/g$ or more in comparison with setting the specific surface area of the positive active material to be 5 $m^2/g$. The fifth-second charge current and cycling characteristics taper off as the specific surface area of the positive active material is increased, and when the specific surface area of the positive active material reaches 14.1 $m^2/g$, the cycling characteristics tend to be reduced in comparison with a specific surface area of the positive active material of 13 $m^2/g$.

[Table 3] (not according to the invention)

| (Measurement results for the type 2 lead acid storage battery) | | | | | | | |
|---|---|---|---|---|---|---|---|
| No. | Specific surface area of positive active material | Neg. plate type | Separator type | Fifth-sec. charge current | | Cycling characteristi cs | Remarks |
| | | | | At start | After 5000 cycles | | |
| 1 | 5.0 $m^2/g$ | B | Q | 155 | 115 | 290 | Conv. example |
| 2 | 6.0 | | | 165 | 120 | 295 | Examples |
| 3 | 7.4 | | | 174 | 126 | 300 | |
| 4 | 8.8 | | | 184 | 131 | 304 | |
| 5 | 13.0 | | | 196 | 140 | 307 | |
| 6 | 14.1 | | | 200 | 140 | 298 | |

Based on the results above, it is apparent that charge current (charge acceptance) and cycling characteristics (service life performance under PSOC) can be dramatically improved in comparison to when the condensate of Chemical formula 1 is used as the main component of an organic compound for reducing the coarsening of negative active material. Also, based on the results above, it is apparent that the cycling characteristics can be dramatically improved by using the separator Q, which uses a nonwoven in the portion facing the plate, as the separator in comparison with the case in which a polystyrene separator P is used. The fifth-second charge current and cycling characteristics can be clearly improved by setting the specific surface area of the positive active material to be 6 $m^2/g$ or more in comparison with setting the specific surface area of the positive active material to be 5 $m^2/g$. In this case as well, the fifth-second charge

current and cycling characteristics tend to taper off as the specific surface area of the positive active material is increased, and when the specific surface area of the positive active material reaches 14.1 $m^2/g$, the service life performance tends to be reduced in comparison with a specific surface area of the positive active material of 13 $m^2/g$. Also, based on the results above, it is apparent that the fifth-second charge current can be improved by about twice that of the conventional example and that the cycling characteristics can be improved by about three times that of the conventional example when the specific surface area of the positive active material is set in a range of 6 $m^2/g$ or more in the case that the condensate of Chemical formula 1 is used as the organic compound for reducing the coarsening of negative active material and that the separator Q in which the portion facing the negative plate is composed of a nonwoven is used as the separator.

[Table 4] (not according to the invention)

| (Measurement results for the type 3 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 1 | 5.0 $m^2/g$ | A | P | 100 | 52 | 100 | Conv. example |
| 2 | 6.0 | | | 102 | 53 | 110 | Examples |
| 3 | 7.4 | | | 102 | 54 | 115 | |
| 4 | 8.8 | | | 103 | 55 | 115 | |
| 5 | 13.0 | | | 103 | 55 | 115 | |
| 6 | 14.1 | | | 103 | 55 | 115 | |

Based on the results above, it is apparent that charge current and cycling characteristics can be dramatically improved when the sodium lignin sulfonate of Chemical formula 2 is used as the main component of the organic compound for reducing the coarsening of negative active material, by setting the specific surface area of the positive active material to be 6 $m^2/g$ or more in comparison with the case in which the specific surface area of the positive active material is set to 5 $m^2/g$. In this case as well, the fifth-second charge current and cycling characteristics tend to taper off as the specific surface area of the positive active material is increased.

[Table 5] (not according to the invention)

| (Measurement results for the type 4 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 1 | 5.0 $m^2/g$ | A | Q | 95 | 62 | 130 | Comp. example |
| 2 | 6.0 | | | 97 | 64 | 140 | Examples |
| 3 | 7.4 | | | 98 | 65 | 144 | |
| 4 | 8.8 | | | 99 | 66 | 145 | |
| 5 | 13.0 | | | 99 | 66 | 145 | |
| 6 | 14.1 | | | 99 | 66 | 145 | |

Based on the results above, it is apparent that the cycling characteristics can be dramatically improved when the sodium lignin sulfonate of Chemical formula 2 is used as the main component of the organic compound for reducing the coarsening of negative active material, using the separator Q, which uses a nonwoven in the portion facing the negative plate, is used as the separator in comparison with the case of Table 4 in which a polyethylene separator P is

used. In this case as well, the fifth-second charge current and cycling characteristics can be improved by setting the specific surface area of the positive active material to be 6 $m^2/g$ or more in comparison with the case in which the specific surface area of the positive active material is set to 5 $m^2/g$, but the fifth-second charge current and cycling characteristics tend to taper off as the specific surface area of the positive active material is increased.

[Table 6]

| (Measurement results for the type 5 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 1 | 5.0 $m^2/g$ | C | P | 161 | 99 | 230 | Comp. example |
| 2 | 6.0 | | | 171 | 105 | 244 | Examples |
| 3 | 7.4 | | | 181 | 116 | 253 | |
| 4 | 8.8 | | | 190 | 125 | 268 | |
| 5 | 13.0 | | | 204 | 127 | 272 | |
| 6 | 14.1 | | | 207 | 127 | 251 | |

When Tables 2 and 6 are compared, the effect of the carbonaceous electrically conductive material added to the negative plate can be observed. Table 6 shows the measurement results of the cycling characteristics for the case in which the bisphenolA aminobenzenesulfonic acid formaldehyde condensate of Chemical formula 1 is used as the main component of the organic compound for reducing the coarsening of negative active material, the separator P is used as the separator in the portion facing the negative plate, and 2 parts by mass of flake graphite have been added to 100 parts by mass of active material. Table 2 shows the measurement results of the cycling characteristics for the case in which the bisphenolA aminobenzenesulfonic acid formaldehyde condensate of Chemical formula 1 is used as the main component of the organic compound for reducing the coarsening of negative active material, the separator P is used as the separator in the portion facing the negative plate, and 0.2 parts by mass of carbon black have been added to 100 parts by mass of active material.

Scaly graphite has a characteristic in which the physical properties of the active material paste do not vary (the paste does not harden) even when the added amount is increased, so the added amount can therefore be increased.

When Tables 2 and 6 are compared, there is no considerable difference between the initial fifth-second charge currents for the case in which 2 parts by mass of flake graphite are added and the case in which 0.2 parts by mass of carbon black are added. However, it is apparent that the fifth-second charge current and cycling characteristics after 5000 cycles can be even more dramatically improved in comparison with the case in which 0.2 parts by mass of carbon black are added.

In the case that 2 parts by mass of flake graphite is added, the fifth-second charge current and cycling characteristics can be improved by setting the specific surface area of the positive active material to 6 $m^2/g$ or more in comparison with the case in which the specific surface area of the positive active material is 5 $m^2/g$, but the fifth-second charge current and cycling characteristics taper off as the specific surface area of the positive active material is increased, and when the specific surface area of the positive active material reaches 14.1 $m^2/g$, the cycling characteristics tend to be reduced in comparison with a specific surface area of the positive active material of 13 $m^2/g$.

[Table 7]

| (Measurement results for the type 6 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 1 | 5.0 $m^2/g$ | | | 156 | 116 | 292 | Comp. example |

(continued)

| (Measurement results for the type 6 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 2 | 6.0 | C | Q | 166 | 125 | 306 | Examples |
| 3 | 7.4 | | | 176 | 136 | 314 | |
| 4 | 8.8 | | | 185 | 145 | 328 | |
| 5 | 13.0 | | | 199 | 155 | 332 | |
| 6 | 14.1 | | | 202 | 155 | 319 | |

When Tables 3 and 7 are compared, it is apparent that there is no considerable difference between the initial fifth-second charge currents for the case in which 2 parts by mass of flake graphite as the carbonaceous electrically conductive material added to the negative plate were added per 100 parts by mass of active material, and the fifth-second charge current and cycling characteristics after 5000 cycles were even more greatly improved in comparison with the case in which 0.2 parts by mass of carbon black were added to 100 parts by mass of the active material.

When Tables 6 and 7 are compared, it is apparent that cycling characteristics can be even more dramatically improved by using the separator Q, which uses a nonwoven in the portion facing the negative plate, as the separator in comparison with the case in which a polystyrene separator P is used. In this case as well, the fifth-second charge current and cycling characteristics can be improved by setting the specific surface area of the positive active material to be 6 $m^2/g$ or more in comparison with the case in which the specific surface area of the positive active material is set to 5 $m^2/g$, but the fifth-second charge current and cycling characteristics tend to taper off as the specific surface area of the positive active material is increased, and when the specific surface area of the positive active material reaches 14.1 $m^2/g$, the service life performance tends to be reduced in comparison with a specific surface area of the positive active material of 13 $m^2/g$.

[Table 8]

| (not according to the invention)<br>(Measurement results for the type 7 lead acid storage battery) | | | | | | | |
|---|---|---|---|---|---|---|---|
| No. | Specific surface area of positive active material | Neg. plate type | Separator type | Fifth-sec. charge current | | Cycling characteristics | Remarks |
| | | | | At start | After 5000 cycles | | |
| 1 | 5.0 $m^2/g$ | B' carbonaceous electrically conductive material was not added | Q | 127 | 53 | 120 | Reference examples |
| 2 | 6.0 | | | 137 | 55 | 123 | |
| 3 | 7.4 | | | 147 | 56 | 125 | |
| 4 | 8.8 | | | 156 | 57 | 127 | |
| 5 | 13.0 | | | 170 | 57 | 127 | |
| 6 | 14.1 | | | 173 | 57 | 127 | |

Table 8 shows reference examples for the case in which a carbonaceous electrically conductive material has not been added. Based on the results above, it is apparent that the fifth-second charge current and cycling characteristics can be dramatically improved initially when the condensate of Chemical formula 1 is used as the main component of an organic compound for reducing the coarsening of negative active material, even in a case where a carbonaceous electrically conductive material has not been added to the negative active material. In this case as well, the fifth-second charge current and cycling characteristics tend can 45 be improved by setting the specific surface area of the positive

active material to 6 $m^2/g$ or higher, in comparison with the case in which the specific surface area of the positive active material is set to 5 $m^2/g$. However, the fifth-second charge current and cycling characteristics tend to taper off as the specific surface area of the positive active material is increased.

The initial fifth-second charge current is slightly higher than the case of Table 3. However, the cycling characteristics are markedly worse than the case of Table 3 because there was no added carbonaceous electrically conductive material, which has the effect of finely dispersing lead sulfate generated in the negative active material during discharge. In other words, the initial charge acceptance was excellent, but the excellent state could not be maintained over the charging and discharging cycles, and the charge acceptance declined in accompaniment with the progress of the charging and discharging cycles, and the cycling characteristics were therefore degraded. When a carbonaceous electrically conductive material is not added, the cycling characteristics cannot be improved even when the specific surface area of the active material of the positive plate has been optimally adjusted.

Based on the results shown in Tables 2 to 7, although there are some differences, it is apparent that the fifth-second charge current can be improved when the specific surface area of the positive active material is set to the 6 $m^2/g$ or more in comparison with the case in which the specific surface area of the positive active material has been set to 5 $m^2/g$.

It is apparent from a comparison of Tables 2, 4, and 6 and Tables 3, 5, and 7, which indicate the evaluation results for the lead acid storage batteries having the plate pack configurations in which the same separator is used, that charge acceptance is dramatically improved over the conventional example even when the specific surface area of the positive active material was set to 5 $m^2/g$, for the case that the negative plate B or C is used in which an organic compound having the condensate of Chemical formula 1 as a main component is selected as the organic compound for reducing the coarsening of negative active material. Charge acceptance could not be dramatically improved even when the specific surface area of the positive active material was increased for the case in which the negative plate type A was used in which the sodium lignin sulfonate expressed in Chemical formula 2 as the main component was selected as the organic compound for reducing the coarsening of negative active material. In contrast, the charge acceptance was dramatically improved by increasing the specific surface area of the positive active material for the case in which negative plate types B and C were used in which the condensate expressed in Chemical formula 1 was used as the organic compound for reducing the coarsening of negative active material, and it is apparent that the charge acceptance reached about double that of the case in which the specific surface area of the positive active material was set to a maximum of 5 $m^2/g$.

It is apparent from a comparison of Tables 2, 4, 6 and Tables 3, 5, 7 that cycling characteristics are dramatically improved for the case in which the negative plate B or C is used. This indicates that the charge acceptance of the negative plate greatly affects the charge acceptance of the entire battery in the same manner as the measurement results of the charge acceptance described above. Among these results, the cycling characteristics were about three times higher than the conventional example according to the results of Tables 3, 5, and 7 in which the separator Q was used.

On the other hand, the number of cycles tends to gradually decline as the specific surface area of the positive active material is increased, and the number of cycles is reduced by 10% when the specific surface area of the positive active material exceeds 13 $m^2/g$ in comparison with a specific surface area of the positive active material 7.4 $m^2/g$. This is due to the fact that the structure of the active material is destroyed by repeated charging and discharging and a phenomenon referred to as so-called "sludge formation" occurs because the porosity of the active material becomes excessively high. Therefore, it is thought that the specific surface area of the positive active material is most preferably in a range of 6 $m^2/g$ or more and 13 $m^2/g$ or less. In view of the above, a cycling test was carried out in which the lead acid storage batteries of Tables 2, 4, and 6 were discharged for one hour at a current of 0.2 C, and then charged for 1.25 hours at a current of 0.2 C, the above discharging and charging constituting a single cycle. The cycling test is a heavy-load service life test, and is not a service life mode in which the negative active material is coarsened and sulfation occurs, but is rather a cycling test in which the service life of a battery is reached when discharge is no longer possible due to sludge formation of the positive active material. With this test, service life ends when the voltage measured after one hour of discharge has fallen below 10.2 V. Table 9 shows the test results of evaluating the cycling characteristics in which a positive plate having a specific surface area of 6 $m^2/g$ was used and the service life was set to 100. The test results were the same for the cases in which negative plates A, B, and C were used.

[Table 9]

| No. | Specific surface area of positive active material | Cycling results |
|---|---|---|
| 1 | 5.0 $m^2/g$ | 100 |
| 2 | 6.0 | 100 |
| 3 | 7.4 | 99 |
| 4 | 8.8 | 97 |

(continued)

| No. | Specific surface area of positive active material | Cycling results |
|---|---|---|
| 5 | 13.0 | 95 |
| 6 | 14.1 | 80 |

Thus, the cycling results were dramatically reduced when the specific surface area of the positive active material exceeded 13 $m^2/g$. Based on this fact, the results of Tables 2 to 7 in general, and from the aspect of usage under a heavy load, it is thought that the specific surface area of the positive active material is most preferably in a range of 6 $m^2/g$ or more and 13 $m^2/g$ or less. The cycling characteristics shown in Tables 2 to 7 are at the end of service life mainly due to sulfation and coarsening of the negative active material when the specific surface area of the active material is low, and are moving toward the end of service life due to sludge formation of the positive active material as the specific surface area of the active material is increased.

However, the number of cycles is 2.9 times greater than the conventional example due to the synergistic effect with the improvement in charge acceptance of the negative plate, even when the specific surface area of the positive active material exceeds 13 $m^2/g$. As noted above, it is apparent that the charge acceptance and service life performance of a battery can be improved by using a negative plate with improved charge acceptance and by increasing the specific surface area of the active material of the positive plate. It is also apparent that the cycling characteristics can be dramatically improved by changing the separator from a polyethylene separator P to a separator Q in which the portion facing the negative plate is composed of a nonwoven in the case that the main component of the organic compound for reducing the coarsening of negative active material is the condensate of Chemical formula 1 or is the sodium lignin sulfonate of Chemical formula 2.

A particularly excellent effect can be obtained with the use of a condensate having a basic structural unit in which a p- aminobenzenesulfonic acid is bonded to the benzene nucleus of a bisphenol, but the same effect can be obtained even with the use of a condensate in which a sulfonic acid is bonded to the benzene nucleus of a bisphenol.

Next, a test was carried out to confirm the effect that the particle diameter has on the battery characteristics when the average primary particle diameter of flake graphite is varied in the No. 4 type lead acid storage battery in Table 6 and the No. 4 type lead acid storage battery shown in Table 7. In this test, the average primary particle diameter of the flake graphite was varied, i.e., 80 μm, 100 μm, 120 μm, 140 μm, 180 μm, and 220 μm. This variation was similarly applied to the lead acid storage battery of No. 4 of Table 6 and No. 4 of Table 7. Table 10 shows the results of evaluating the fifth-second charge current and the cycling characteristics for the No. 4 type lead acid storage battery shown in Table 6; and Table 11 shows the results of evaluating the fifth-second charge current and the cycling characteristics for the No. 4 type lead acid storage battery shown in Table 7. The fifth-second charge current and cycling characteristics shown in the tables were evaluated with the conventional example of Table 4 set to 100 (with the fifth-second charge current initially set to 100) in the same manner as Tables 2 to 8.

[Table 10]

| No. | Specific surface area of positive active material | Neg. plate type | Separator type | Graphite particle diameter (μm) | Fifth-sec. charge current | | Cycling characteristics | Remarks |
|---|---|---|---|---|---|---|---|---|
| | | | | | At start | After 5000 cycles | | |
| 1 | 8.8 $m^2/g$ | C | P | 80 | 159 | 58 | 122 | Examples |
| 2 | | | | 100 | 170 | 80 | 195 | |
| 3 | | | | 120 | 175 | 91 | 213 | |
| 4 | | | | 140 | 180 | 103 | 231 | |
| 5 | | | | 180 | 190 | 125 | 268 | |
| 6 | | | | 220 | 190 | 125 | 268 | |

[Table 11]

| No. | Specific surface area of positive active material | Neg. plate type | Separator type | Graphite particle diameter (μm) | Fifth-sec. charge current | | Cycling characteristics | Remarks |
|---|---|---|---|---|---|---|---|---|
| | | | | | At start | After 5000 cycles | | |
| 1 | 8.8 $m^2/g$ | C | Q | 80 | 157 | 75 | 182 | Examples |
| 2 | | | | 100 | 165 | 100 | 255 | |
| 3 | | | | 120 | 170 | 111 | 273 | |
| 4 | | | | 140 | 175 | 123 | 292 | |
| 5 | | | | 180 | 185 | 145 | 328 | |
| 6 | | | | 220 | 185 | 145 | 328 | |

Based on the results of Tables 10 and 11, it is apparent that the initial fifth-second charge current increases as the average primary particle diameter of the flake graphite is increased, without any relation to the type of separator that is used, and that the cycling characteristics are also improved. This tendency is marked when the average primary particle diameter of the flake graphite is in the range of 100 μm or more, and the effect is low when the average primary particle diameter of the flake graphite is 80 μm. This is due to the fact that electrical resistance increases at contact point when the average primary particle diameter of the flake graphite is low, the electrical resistance is reduced when the particle diameter is high, and the charging characteristics and cycle service life are improved. In the same manner as the results described above, it is apparent in this case as well that the cycling characteristics are dramatically improved when the separator is the separator Q in which a nonwoven is used as the portion facing the negative plate, in comparison with the case in which a polyethylene separator P. Based on these results, the average primary particle diameter of the flake graphite is preferably in a range of 100 μm or more, and is most optimally 140 μm or more. The flake graphite is commonly manufactured by refining natural graphite. Flake graphite that has an average primary particle diameter in excess of 220 μm has a low yield during manufacture and is difficult to obtain in industrial quantities.

In conventional lead acid storage batteries, efforts have been made exclusively to improve the charge acceptance and service life performance of the negative plate in order to improve the charge acceptance of the lead acid storage battery, and there has been no consideration given to improving the charge acceptance of a lead acid storage battery by improving the performance of the positive plate. For this reason, the charge acceptance of the entire lead acid storage battery has been conventionally determined by the charge acceptance of the negative plate, and there are limitations to improving the charge acceptance of a lead acid storage battery. With the present invention, consideration is given to the performance of the positive active material in order to break through this limitation, and the charge acceptance of an entire battery can be further improved over a conventional lead acid storage battery by improving the performance of the positive active material.

In the prior art, improvements in the charge acceptance have been made by improvements only in the characteristics of the negative plate, but in the present invention, the charge acceptance of the positive plate is improved by increasing the specific surface area of the positive active material, whereby the charge acceptance of the entire battery can be further improved over conventional examples, and even higher efficiency discharging under PSOC is made possible. In accordance with the present invention, repeated charging and discharging in a state of insufficient discharge can be prevented because the charge acceptance of the lead acid storage battery can be improved. Therefore, it is possible to prevent the coarsening of lead sulfate particle, which is a discharge product, when charging and discharging is repeated in a state of insufficient charge, and it is possible to improve the service life performance of a lead acid storage battery under PSOC. This constitutes considerable forward progress for lead acid storage batteries used under PSOC, and provides considerable contribution to the improvement in the performance of lead acid storage batteries mounted in a micro hybrid vehicle, or the like.

Industrial Applicability

As described above, the present invention provides a flooded-type lead acid storage battery in which the charge acceptance and the service life performance under PSOC is improved over a conventional lead acid storage battery and contributes to the diffusion of ISS vehicles, power generation and control vehicles, and other micro-hybrid vehicles. Therefore, the present invention has considerable industrial applicability in that it contributes to lower $CO_2$ emissions by improving the fuel efficiency of automobiles, and is useful in solving the global issue of reducing global warming.

**Claims**

1. A flooded-type lead acid storage battery having a configuration in which a plate pack is accommodated in a container together with an electrolyte, the plate pack being obtained by stacking separators between negative plates comprising a negative active material packed into a negative collector and positive plates comprising a positive active material packed into a positive collector, the lead acid storage battery being **characterized in that**:

   at least a carbonaceous electrically conductive material and an organic compound for reducing coarsening of the negative active material due to charging and discharging are added to the negative active material;
   the specific surface area of the active material of the positive plate is set to 6 $m^2/g$ or more;
   the organic compound for reducing coarsening of the negative active material due to charging and discharging is an organic compound having a bisphenol aminobenzenesulfonic acid formaldehyde condensate as a main component; and
   the carbonaceous electrically conductive material is flake graphite, the average primary particle diameter of which being 100 $\mu m$ or more.

2. The lead acid storage battery of claim 1, the bisphenol aminobenzenesulfonic acid formaldehyde condensate is a bisphenolA aminobenzenesulfonic acid formaldehyde condensate expressed in the chemical structure formula of Chemical formula 1 noted below.

[Chemical formula 1]

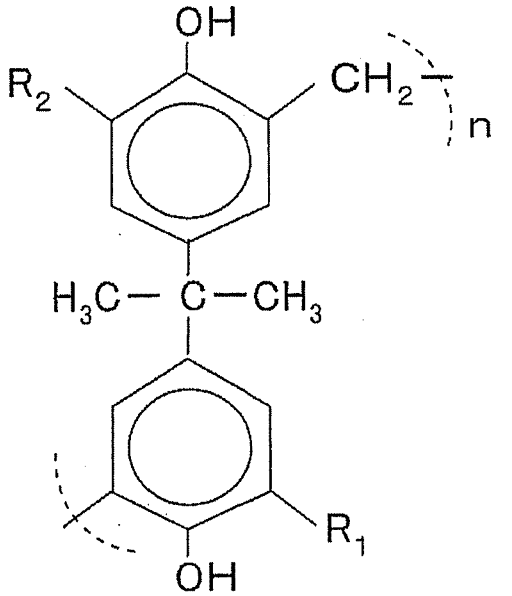

where $R_1$, $R_2$ are hydrogen or

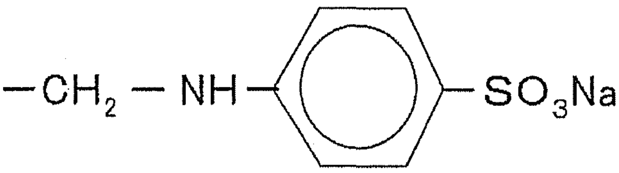

(excluding the case in which $R_1$, $R_2$ are both hydrogen)

3. The lead acid storage battery of claim 1 or 2 wherein the separator is configured so as to comprise a nonwoven in which the surface facing the surface of the negative plate comprises a fiber of at least one material selected from the material group consisting of glass, pulp, and polyolefin.

4. The lead acid storage battery of claim 3, wherein the specific surface area of the active material of the positive plate is set to 6 $m^2/g$ or more and 13 $m^2/g$ or less.

**Patentansprüche**

1. Blei-Säure-Akkumulator des nassen Typs mit einer Anordnung, bei welcher ein Plattenbündel in einem Behälter zusammen mit einem Elektrolyten untergebracht ist, wobei das Plattenbündel durch Zwischenlegen von Separatoren zwischen negative Platten mit einem in einem Negativkollektor gepackten negativen Aktivmaterial und positive Platten mit einem in einen Positivkollektor gepackten positivem Aktivmaterial geschaffen ist, **gekennzeichnet durch**:

- mindestens ein kohlenstoffhaltiges elektrisch leitendes Material und eine organische Mischung zum Reduzieren einer Vergröberung des negativen Aktivmaterials aufgrund Laden und Entladen zu dem negativen Aktivmaterial zugegeben sind,
- der spezifische Oberflächenbereich des Aktivmaterials der positiven Platte auf 6 $m^2/g$. oder größer gesetzt ist,
- die organische Mischung zum Reduzieren des Vergröberns des negativen Aktivmaterials wegen Laden und Entladen eine organische Mischung ist, welche Bisphenol-Aminobenzolsulfonsäuren-Formaldehydkondensat als eine Hauptkomponente aufweist, und
- das kohlenstoffhaltige elektrisch leitende Material Flockengraphit ist, bei welchem der durchschnittliche Partikeldurchmesser 100 $\mu$m oder mehr beträgt.

**2.** Blei-Säure-Akkumulator nach Anspruch 1,
wobei das Bisphenol-Aminobenzolsulfonsäuren-Formaldehydkondensat ein Bis-phenol A-Aminobenzolsulfonsäuren-Formaldehydkondensat ist, welches in der chemischen Strukturformel der chemischen Formel 1, wie nachfolgend dargestellt ist:

Chemische Formel 1

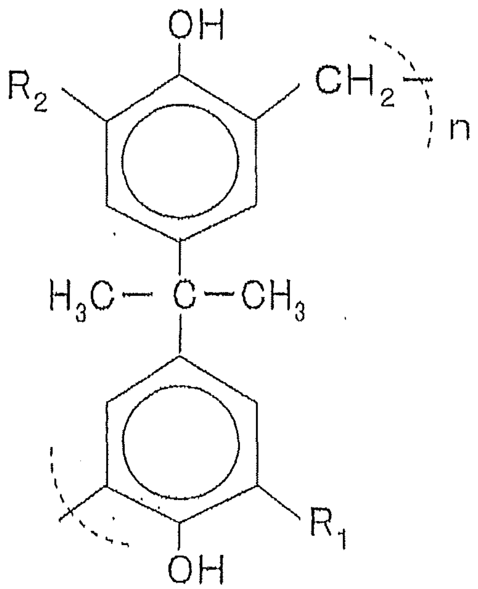

wobei $R_1$, $R_2$ Wasserstoff oder

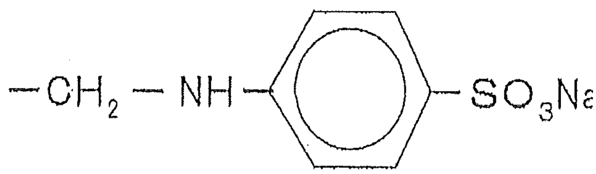

(ausgeschlossen der Fall, dass $R_1$, $R_2$ beide Wasserstoff sind)

**3.** Blei-Säure-Akkumulator nach Anspruch 1 oder 2,
wobei der Separator so ausgebildet ist, dass er ein nicht gewebtes Textil aufweist, in welchem die Fläche, welche der Fläche der negativen Platte gegenüberliegt, eine Faser aus mindestens einem Material aufweist, welches aus der Materialgruppe von Glas, Zellstoff und Polyolefin ausgewählt ist.

**4.** Blei-Säure-Akkumulator nach Anspruch 3,
wobei der spezifische Oberflächenbereich des Aktivmaterials der positiven Platte auf 6 $m^2/g$. und mehr und 13 $m^2/g$. oder weniger eingestellt ist.

**Revendications**

**1.** Accumulateur au plomb de type noyé, ayant une configuration dans laquelle un paquet de plaques est logé dans un bac ensemble avec un électrolyte, le paquet de plaques étant obtenu en empilant des séparateurs entre des plaques négatives comprenant une matière active négative serrées dans un collecteur négatif et des plaques positives comprenant une matière active positive serrées dans un collecteur positif, l'accumulateur au plomb étant **caractérisé en ce que** :

au moins une matière carbonacée conductrice de l'électricité et un composé organique pour réduire le grossissement de la matière active négative dû à la charge et à la décharge sont ajoutés à la matière active négative ;

la surface spécifique de la matière active de la plaque positive est fixée à une valeur supérieur ou égale à 6 $m^2/g$ ; le composé organique pour réduire le grossissement de la matière active négative dû à la charge et à la décharge est un composé organique ayant un produit condensé de l'acide bisphénol aminobenzènesulfonique et du formaldéhyde comme constituant principal et
la matière carbonacée conductrice de l'électricité est du graphite lamellaire, dont le diamètre moyen de particule primaire est supérieur ou égal à 100 μm.

2. Accumulateur au plomb suivant la revendication 1, le produit condensé de l'acide bisphénol aminobenzènesulfonique et du formaldéhyde étant un produit condensé de l'acide bisphénol A aminobenzènesulfonique et du formaldéhyde exprimé dans la formule 1 de structure chimique indiquée ci-dessous :

[formule chimique 1]

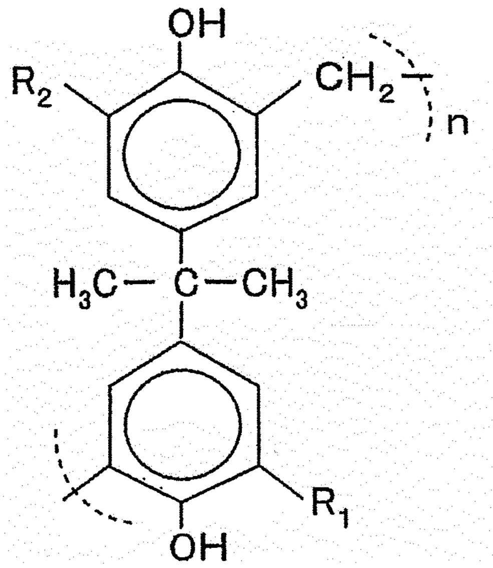

dans laquelle $R_1$, $R_2$ sont hydrogène ou

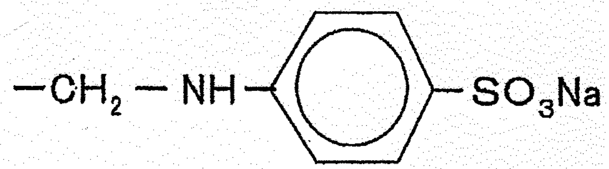

(à l'exclusion du cas dans lequel $R_1$, $R_2$ sont tous deux hydrogène)

3. Accumulateur au plomb suivant la revendication 1 ou 2, dans lequel le séparateur est configuré de manière à comprendre un non-tissé dans lequel la surface faisant face à la surface de la plaque négative comprend une fibre d'au moins une matière choisie parmi le groupe de matière consistant en du verre, de la pâte à papier et une polyoléfine.

4. Accumulateur au plomb suivant la revendication 3, dans lequel la surface spécifique de la matière active de la plaque positive est fixée à une valeur supérieure ou égale à 6 $m^2/g$ et inférieure ou égale à 13 $m^2/g$.

FIG. 1

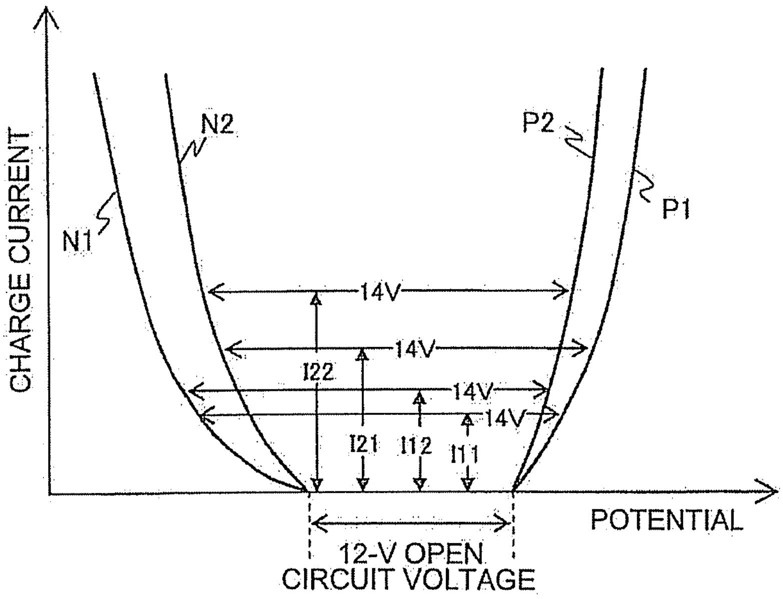

CHARGE CURRENT
N1
N2
P2
P1
14V
14V
14V
14V
I22
I21
I12
I11
POTENTIAL
12-V OPEN
CIRCUIT VOLTAGE


FIG. 2

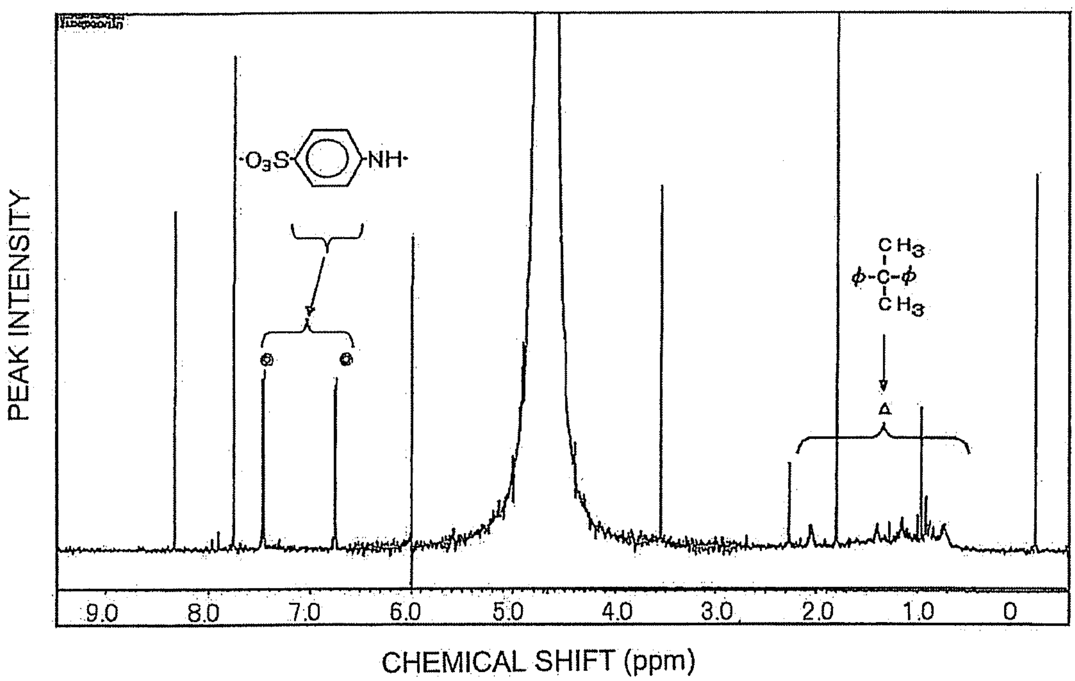

PEAK INTENSITY
-O3S- -NH-
CH3
ϕ-C-ϕ
CH3
9.0
8.0
7.0
6.0
5.0
4.0
3.0
2.0
1.0
0
CHEMICAL SHIFT (ppm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10040907 A
- JP 2003036882 A
- JP 7201331 A
- JP 11250913 A
- JP 2006196191 A
- JP 2003051306 A
- JP 2004127585 A
- JP 2003338284 A
- US 6074782 A
- WO 2005124920 A
- JP 2008277244 A
- JP 2002231247 A
- JP 2002141066 A
- JP 2002260714 A